# EUROPEAN PATENT APPLICATION

(11) **EP 4 626 082 A1**
(43) Date of publication of application: **01.10.2025**
(21) Application number: 23895058.8
(22) Date of filing: 23.11.2023
(51) Int. Cl.: H04W 48/18, H04W 4/40, H04W 88/06, H04W 92/18, B60W 50/00

(54) **VEHICLE COMMUNICATION DEVICE AND METHOD**

(30) Priority: 23.11.2022 KR 20220158787
(71) Applicant: LG INNOTEK CO. LTD, Gangseo-gu Seoul 07796 (KR)
(72) Inventor: JO, Sang Uk, Seoul 07796 (KR)
(74) Representative: Plasseraud IP
(86) International application number: PCT/KR2023/019041
(87) International publication number: WO 2024/112131

(57) **Abstract**

A vehicle communication device according to an embodiment of the present invention comprises: a control unit for determining a vehicle driving mode and a vehicle state; and a communication module for selecting a network slice instance according to the vehicle driving mode and the vehicle state received from the control unit and performing communication, wherein the communication module stores information on a network slice instance corresponding to at least one vehicle driving mode.

## Description

### [Technical Field]

The present invention relates to a vehicle communication device and method, and more particularly, to a vehicle communication device and method for connecting with a network slice optimized according to a vehicle driving mode.

### [Background Art]

Network slicing technology is a technology that reduces network construction costs by providing various services with different characteristics by creating multiple logical networks configured with specific network functions on a single physical network rather than building multiple physical networks for each individual service to meet different performance requirements.

For wireless communications, including conventional vehicle communications, most resource allocations and data paths are used in a static or semi-static manner. Therefore, there is a problem that resource allocations and parameters are not optimized for each individual vehicle.

### [Detailed Description of the Invention]

### [Technical Subject]

The technical problem to be solved by the present invention is to provide a communication device and method for connecting to a network slice optimized according to a vehicle driving mode.

### [Technical Solution]

In order to solve the above technical problem, a vehicle communication device according to the present embodiment comprises: a control unit for determining a vehicle driving mode and a vehicle state; and a communication module for selecting a network slice instance according to the vehicle driving mode and the vehicle state received from the control unit and performing communication, wherein the communication module stores information on a network slice instance corresponding to at least one vehicle driving mode.

When the vehicle driving mode and vehicle state are changed, the communication module may select a network slice instance according to the vehicle driving mode and vehicle state that have been changed for communication.

The communication module requests a first base station to connect to a network slice instance corresponding to a vehicle driving mode and a vehicle state, verifies access authentication, and is connected to the network slice instance, and thereafter, when at least one of the vehicle driving mode and the vehicle state is changed, requests the first base station to change the network slice instance and is connected to the network slice instance that has been changed.

The vehicle driving mode may comprise a first driving mode which is an autonomous driving state of Level 1 or higher, a second driving mode which is an autonomous driving state of less than the Level 1, a third driving mode which is a remote driving state, and a fourth driving mode which is a parking state.

The vehicle state can be determined based on the function being executed in the vehicle.

The communication module stores the performance ranking of the network slice instance, and when a network slice instance according to the vehicle driving mode and a network slice instance according to the vehicle state are different, a network slice instance with a higher performance ranking can be selected.

In order to solve the above technical problem, a vehicle communication method according to the present embodiment comprises the steps of: determining a vehicle driving mode and a vehicle state; selecting a network slice instance according to the vehicle driving mode and the vehicle state and requesting registration to a base station; confirming access authentication between the vehicle and the base station; and connecting the vehicle and the network slice instance via communication.

The method may include the steps of: determining a changed vehicle driving mode and vehicle state; selecting a network slice instance according to the changed vehicle driving mode and vehicle state and requesting registration to a base station; and connecting the vehicle and the network slice instance that has been changed, via communication.

The vehicle driving mode includes: a first driving mode which is an autonomous driving state of Level 1 or higher; a second driving mode which is an autonomous driving state of less than Level 1; a third driving mode which is a remote driving state; and a fourth driving mode which is a parking state, wherein the vehicle state can be determined according to a function being executed in the vehicle.

The communication module stores a performance ranking of the network slice instance, and when a network slice instance according to the vehicle driving mode and a network slice instance according to the vehicle state are different, a network slice instance with a higher performance ranking can be selected.

### [Advantageous Effects]

According to embodiments of the present invention, a network slice set can be dynamically allocated according to a driving mode, an autonomous driving mode, or a vehicle state of a vehicle to provide optimized wireless communication according to a current vehicle state.

In addition, with the introduction of network virtualization technology, flexibility in the network structure between vehicles and base stations can be provided, and stable network connections to vehicles can be maintained.

### [Brief Description of Drawings]

FIG. 1 is a diagram for explaining network slicing.
FIG. 2 is a diagram for explaining a communication method of an existing vehicle.
FIG. 3 is a block diagram of a vehicle communication device according to the present embodiment.
FIG.s 4 and 5 are diagrams for explaining a communication operation of a vehicle communication device according to the present embodiment.
FIG.s 6 and 7 are flowcharts of a vehicle communication method according to the present embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

Network slicing is a core 5G technology that operates by dividing the 5G network into multiple virtual networks, allowing for additional provision of services for special purposes without affecting general Internet quality. In order for a single communication network to provide various services, 5G provides network slices that allow a single physical network to operate as if it were multiple networks.

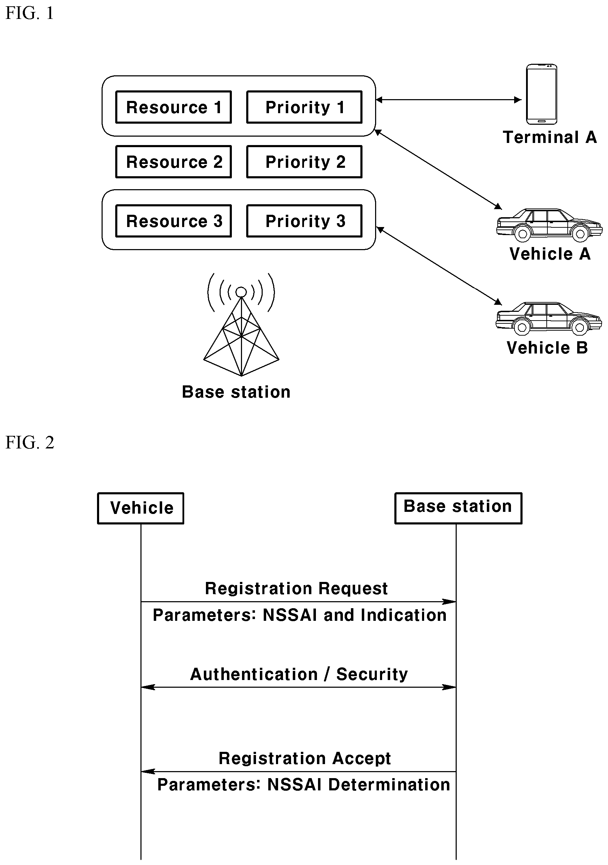

Referring to FIG. 1, network slicing can logically provide multiple network slicing sets to one base station, thereby providing resource allocation and parameter sets including quality of service (QoS) tailored to each of vehicle A, vehicle B, and terminal A.

Network slices have the advantage of being able to provide various services according to delay time, data volume, transmission speed, and the like to provide communication services suitable for individual services. Since the network is virtualized, network slices have the advantage of being able to cope with software upgrades without having to replace all hardware equipment to upgrade the communication network. In addition, even if a virtualized line has a failure, it will not affect other virtual lines, and service quality can be differentiated. By virtualizing the network structure, an environment suitable for communication services can be created, thereby reducing costs and increasing operational efficiency.

Referring to FIG. 2, in existing vehicle communication, network slicing selects a network slice instance to be assigned to a user vehicle based on the network slice selection assistance information (NSSAI) included in the registration request when a vehicle sends a predetermined registration request to the base station.

That is, the network slice instance of a vehicle is designated when a vehicle requests registration to the base station and the network slice instance to be connected is determined when the base station sends a registration acceptance notice to the vehicle. Accordingly, the vehicle communicates through the network slice instance in a static or semi-static manner.

That is, in existing vehicle communications, most resource allocations and data paths are used in a static or semi-static form, so resource allocations and parameters are not optimized for each individual vehicle. In addition, although the base station and vehicles can manage multiple NSSAIs through multiple data network names (DNNs), there is a problem of inefficiency due to resource efficiency or the increase in the number of DNNs that the base station must control and manage.

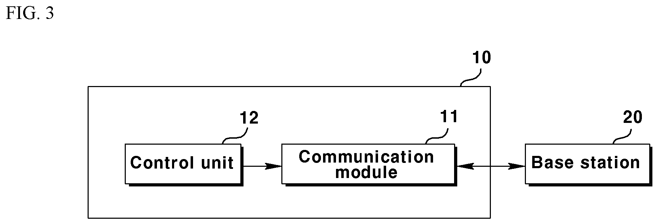

FIG. 3 is a block diagram of a vehicle communication device according to the present embodiment; and FIG.s 4 and 5 are diagrams for explaining a communication operation of a vehicle communication device according to the present embodiment.

For convenience of explanation below, this embodiment uses terms and names defined in the 3rd generation partnership project long term evolution (3GPP LTE) and 5G standards. However, this embodiment is not limited by the terms and names, and can be equally applied to systems that comply with other standards.

A vehicle communication device according to the present embodiment may include a control unit **12** and a communication module **11.** The vehicle communication device may connect a network provided by a vehicle **10** and a base station **20.**

The base station **20** is a network infrastructure that provides wireless access to a vehicle. The base station **20** has coverage defined as a certain geographical area based on the distance at which a signal can be transmitted. The base station **20** may be referred to as an access point (AP), an eNodeB (eNB), a 5th generation node, a wireless point, a transmission/reception point (TRP), an access network (AN), or other terms having an equivalent technical meaning.

The base station **20** can provide different communication services by providing different network slices. The network slices can provide different services according to their characteristics. Each network slice can have different capacities and network environments that can be provided simultaneously. The capacity of the network slice can be, for example, the maximum number of terminals (subscribers) and the number of sessions.

The slice service type (SST) value, which indicates the type of network slice, can be used according to policy in networks managed by telecommunications carriers. The SST value can be negotiated in advance for interworking with other carriers, such as roaming. In 3GPP, four standard values (eMBB = 1, URLLC = 2, MIoT = 3, V2X = 4) of SST are defined.

Enhanced mobile broadband (eMBB) is an improved mobile broadband that prioritizes high data peak transfer speeds in hotspots with high user density and low mobility, and provides services with stable and uniform transmission quality without interruption in wide-area coverage with high mobility. Ultra-Reliable and low latency communications (URLLC) is an ultra-reliable, low-latency communication that means communication with very high data transmission reliability and very short delay time. Massive IoT (MIoT) is a large-scale machine-to-machine communication that refers to machine-to-machine communication that exchanges relatively low-capacity data at low speeds and vehicle to everything (V2X) is a vehicle-to-machine communication based on dedicated short-range communications (DSRC).

The vehicle **10** is a device that performs communication with the base station **20.** A device other than the vehicle **10** may be referred to as a terminal which is a device used by a user. The vehicle **10** may perform communication with the base station **20** through a wireless channel. Hereinafter, the vehicle communication device is described as a communication device applied to the vehicle **10,** but it is not limited thereto, and it is obvious that it may be applied to a terminal used by a user.

For example, a terminal is a device that performs machine type communication (MTC) and may not be carried by a user. The terminal may include at least one user portable device and may include at least one MTC. The terminal may be referred to as a mobile station, a subscriber station, a remote terminal, a wireless terminal, or a user device, or other terms having equivalent technical meanings thereto.

The control unit 12 can determine the vehicle driving mode and vehicle state.

The vehicle driving mode can be determined by the autonomous driving state. Autonomous driving can have different autonomous driving functions depending on the level defined in the SAE J0316 standard. Level 0 does not support any autonomous driving functions, Level 1 supports the vehicle's turning or deceleration functions, Level 2 supports the vehicle's turning and deceleration functions, and Level 3 means that the car can recognize and respond to various unexpected situations and surrounding objects while driving, but when the car determines that the driver needs to drive in unavoidable cases, the driver must intervene and drive. In addition, Level 4 means that all autonomous driving functions are supported in specific environments (areas, weather, and the like) and the driver does not need to intervene in any situations, and Level 5 means that the car supports all autonomous driving functions in all environments and the driver does not need to intervene in any situations.

Depending on the autonomous driving level, communication with the base station, roadside base station, and various sensors installed in the vehicle may be required. In addition, communication performance needs to be improved to achieve a certain level of autonomous driving. The vehicle driving mode can be divided into the first driving mode, which is an autonomous driving state of Level 1 or higher, the second driving mode, which is an autonomous driving state below Level 1, the third driving mode, which is a remote driving state, and the fourth driving mode, which is a parking state. The remote driving state can mean a case where the vehicle is driven through operations outside the vehicle.

Here, Level 1 refers to an autonomous driving level that requires technologies such as sensor sharing, and can mean, for example, Level 4. The criteria for autonomous driving levels that determine the driving mode are not particularly limited to this, and can naturally be varied in various ways.

The vehicle state can be determined based on the function running in the vehicle. For example, the vehicle state can be determined based on the type of application running in the vehicle. The vehicle state can be divided into cases where a high-level application requiring communication with various sensors is running and cases where a low-level application with a general communication level is running. The user can set a priority for a specific application by setting it in advance. When an application to which the user has set a high priority is running, the same level of communication performance as that of a high-level application can be required.

The communication module **11** can select a network slice instance and communicate based on the vehicle driving mode and vehicle state received from the control unit **12.**

The communication module **11** may include a network slice selection function (NSSF). The communication module **11** may be a configuration including an NSSF device. The communication module **11** may be a network entity that performs a network selection operation, for example, an operation of selecting a network slice.

The communication module **11** can select one or more network slice instances using network slice selection assistance information (NSSAI) to communicate with the base station. NSSAI can be used when selecting a specific network slice instance. NSSAI can include a slice/service type (SST).

The communication module **11** can store information on a network slice instance corresponding to at least one vehicle driving mode and a vehicle state. When the vehicle driving mode is divided into first to fourth driving modes, a network slice instance corresponding to each driving mode can be stored. Different network slice instances can be stored for the first to fourth driving modes. The first driving mode can be stored as the first network slice instance, the second driving mode can be stored as the second network slice instance, the third driving mode can be stored as the third network slice instance, and the fourth driving mode can be stored as the fourth network slice instance. For example, each of the first to fourth driving modes can be stored corresponding to one of SST value 1 to SST value 4.

A network slice instance having high communication performance may be stored when a high-level application operates in a vehicle, and a network slice instance having normal communication performance may be stored when a low-level application operates in the vehicle. For example, among the first to fourth network slices, when the communication performance of the first network slice is the highest, followed by the second, third, and fourth network slices, the first network slice instance may be stored when a high-level application operates, and the third network slice instance may be stored when a low-level application operates.

For example, the first driving mode, which is a Level 4 autonomous driving state that requires technologies such as sensor sharing, can be connected to a network of eMBB (SST value: 1). eMBB can support a large amount of sensor information required for autonomous driving in real time through high data transmission speed. The third driving mode, which is a state in which a vehicle is remotely controlled and driven, can be connected to an ultra-low latency network such as URLLC (SST value: 2). When driving a vehicle using cooperative-intelligent transport systems (C-ITS) or advanced driver assistance system (ADAS), V2X (SST value: 4) may be suitable. In addition, when the fourth driving mode is determined to be a vehicle parked or stopped state by monitoring signals such as vehicle accessories (ACC), low transmission speed services such as remote start or vehicle state inquiry are required rather than high data transmission speed or ultra-low latency. Therefore, it may be efficient to increase the density of base stations where network services will be used to increase the number of vehicles for which network services are available.

The communication module **11** stores the performance ranking of the network slice, and when the network slice instance according to the vehicle driving mode and the network slice instance according to the vehicle state are different, the network slice instance with the higher performance ranking can be selected. For example, when the vehicle driving mode is the 4th driving mode and the vehicle state is a high-level application running, the communication module **11** can select the first network slice instance, not the 4th network slice instance.

The communication module **11** selects a network slice to be connected to and sends a registration request to the base station **20** along with the selected network slice instance. Thereafter, an access authentication procedure (Authentication/Request) is performed between the vehicle **10** and the base station **20,** and the NSSAI is determined along with the registration acceptance (Registration Accept) of the base station **20.**

The communication module **11** can select a network slice instance according to the changed vehicle driving mode and vehicle state when the vehicle driving mode and vehicle state are changed. When the base station is not changed and the vehicle driving mode and vehicle state are changed, the communication module **11** and the base station **20** can change the network slice through an NSSAI change request (modification) and an NSSAI change acceptance (modification accept) without additionally performing an access authentication procedure.

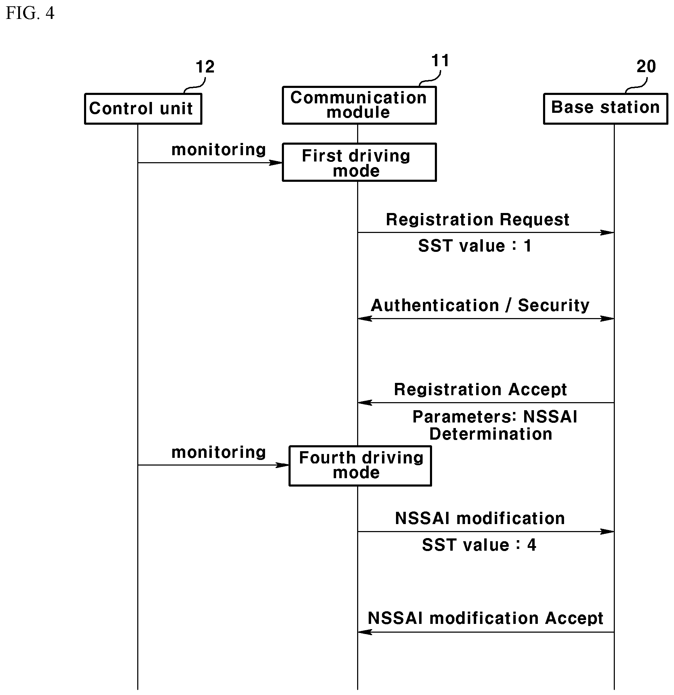

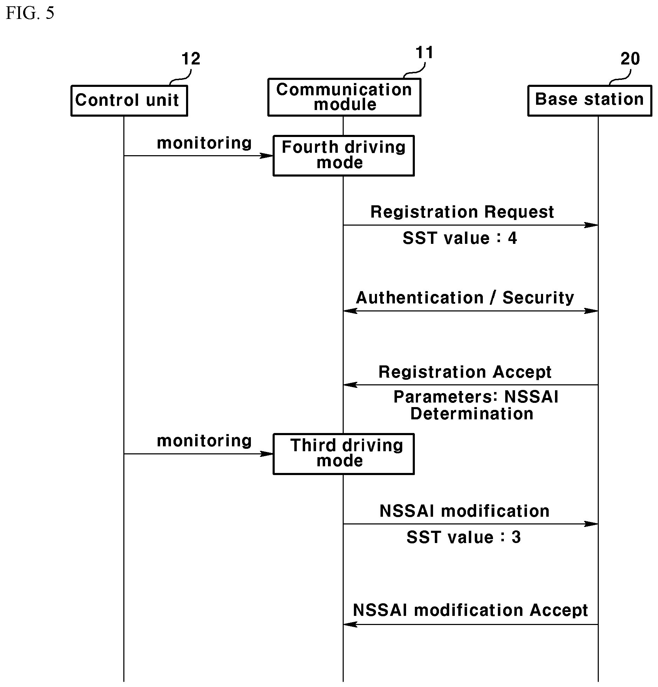

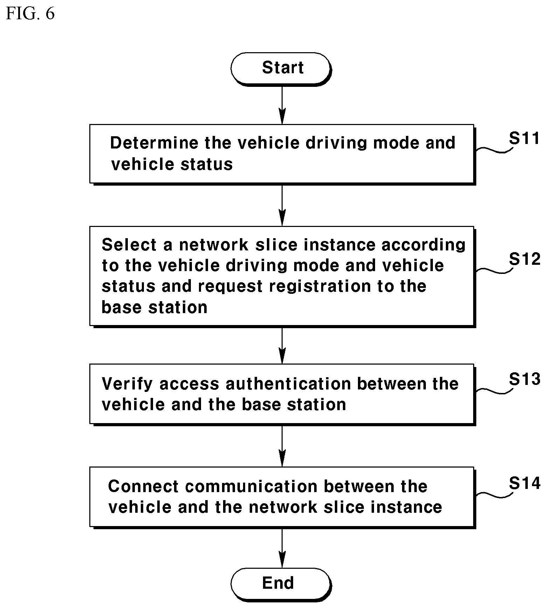

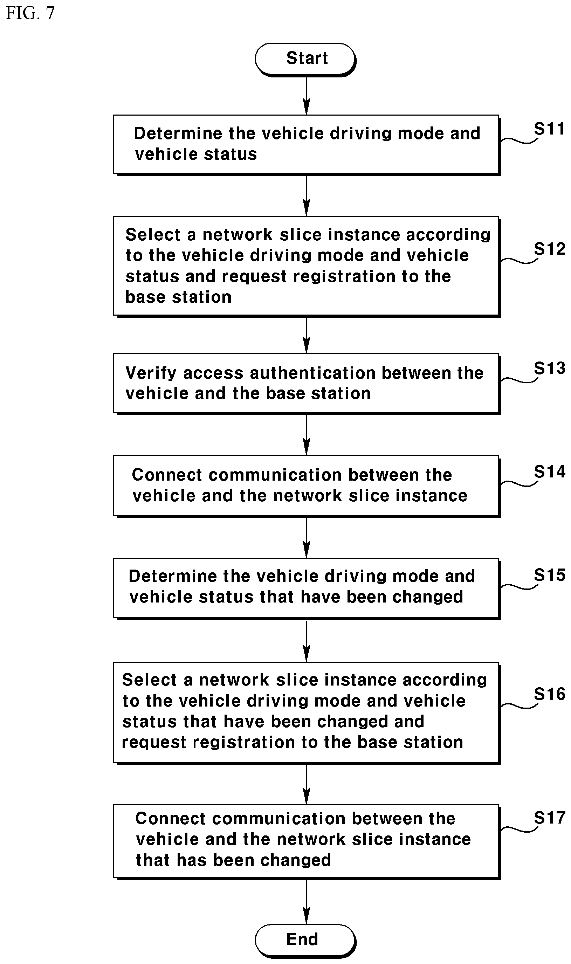

FIGS. 6 and 7 are flowcharts of a vehicle communication method according to the present embodiment. A detailed description of each step of FIGS. 6 and 7 corresponds to the detailed description of the vehicle communication device of FIGS. 3 to 5, and thus, any overlapping description will be omitted below.

In the vehicle communication method, the vehicle driving mode and vehicle state are determined at step **S11,** a network slice instance according to the vehicle driving mode and vehicle state is selected at step **S12** and a registration request is made to the base station, access authentication between the vehicle and the base station is confirmed at step **S13,** and communication between the vehicle and the network slice instance is connected at step **S14.**

Additionally, in step **S15,** the changed vehicle driving mode and vehicle state are determined, in step **S16,** a network slice according to the changed vehicle driving mode and vehicle state is selected and a registration request is made to the base station, and in step **S17,** communication is established between the vehicle and the changed network slice instance.

Meanwhile, the embodiments of the present invention can be implemented as computer readable codes on a computer readable recording medium. The computer readable recording medium includes all types of recording devices in which data readable by a computer system is stored.

As for examples of computer readable recording media, there are ROM, RAM, CD-ROM, magnetic tape, floppy disk, and optical data storage device; in addition, the computer readable recording medium is distributed over networked computer systems; and computer readable code can be stored and executed in a distributed manner. In addition, functional programs, codes, and code segments for implementing the present invention can be easily inferred by programmers in the technical field to which the present invention belongs.

Those skilled in the art related to the present embodiment will be able to understand that it may be implemented in a modified form within a range that does not deviate from the essential characteristics of the above description. Therefore, the disclosed methods are to be considered in an illustrative rather than a limiting sense. The scope of the present invention is shown in the claims rather than the foregoing description, and all differences within the equivalent scope shall be construed as being included in the present invention.

## Claims

1. A vehicle communication device comprising:
a control unit for determining a vehicle driving mode and a vehicle state; and
a communication module for selecting a network slice instance according to the vehicle driving mode and the vehicle state received from the control unit and performing communication,
wherein the communication module stores information on a network slice instance corresponding to at least one vehicle driving mode.

2. The vehicle communication device according to claim 1,
wherein when the vehicle driving mode and vehicle state are changed, the communication module selects a network slice instance according to the vehicle driving mode and vehicle state that have been changed for communication.

3. The vehicle communication device according to claim 1,
wherein the communication module requests a first base station to connect to a network slice instance corresponding to a vehicle driving mode and a vehicle state, verifies access authentication, and is connected to the network slice instance, and
thereafter, when at least one of the vehicle driving mode and the vehicle state is changed, requests the first base station to change the network slice instance and is connected to the network slice instance that has been changed.

4. The vehicle communication device according to claim 1,
wherein the vehicle driving mode includes a first driving mode which is an autonomous driving state of Level 1 or higher, a second driving mode which is an autonomous driving state of less than the Level 1, a third driving mode which is a remote driving state, and a fourth driving mode which is a parking state.

5. The vehicle communication device according to claim 1,
wherein the vehicle state is determined based on the function being executed in the vehicle.

6. The vehicle communication device according to claim 1,
wherein the communication module stores the performance ranking of the network slice instance, and when a network slice instance according to the vehicle driving mode and a network slice instance according to the vehicle state are different, a network slice instance with a higher performance ranking is selected.

7. A vehicle communication method comprising the steps of:
determining a vehicle driving mode and a vehicle state;
selecting a network slice instance according to the vehicle driving mode and the vehicle state and requesting registration to a base station; confirming access authentication between the vehicle and the base station; and
connecting the vehicle and the network slice instance via communication.

8. The vehicle communication method according to claim 7, including the steps of:
determining a changed vehicle driving mode and vehicle state;
selecting a network slice instance according to the changed vehicle driving mode and vehicle state and requesting registration to a base station; and
connecting the vehicle and the network slice instance that has been changed, via communication.

9. The vehicle communication method according to claim 7,
wherein the vehicle driving mode includes: a first driving mode which is an autonomous driving state of Level 1 or higher; a second driving mode which is an autonomous driving state of less than Level 1; a third driving mode which is a remote driving state; and a fourth driving mode which is a parking state, and
wherein the vehicle state is determined according to a function being executed in the vehicle.

10. A vehicle communication method according to claim 7,
wherein the communication module stores a performance ranking of the network slice instance, and
wherein when a network slice instance according to the vehicle driving mode and a network slice instance according to the vehicle state are different, a network slice instance with a higher performance ranking is selected.
